# DEMANDE DE BREVET EUROPEEN

(11) **EP 4 296 109 A1**
(43) Date de publication de la demande: **27.12.2023**
(21) Numéro de dépôt: 23178361.4
(22) Date de dépôt: 09.06.2023
(51) Int. Cl.: B60L 50/64, B60K 1/04, B62D 59/04, B60L 53/80, B60L 50/60

(54) **VEHICULE TERRESTRE OU REMORQUE DE POIDS LOURD AVEC CONTENEUR AMOVIBLE D ENERGIE ELECTRIQUE**

(30) Priorité: 24.06.2022 FR 2206305
(71) Demandeur: IFP Energies nouvelles, 92500 Rueil-Malmaison (FR)
(72) Inventeur: LE BERR, Fabrice, 92852 RUEIL-MALMAISON CEDEX (FR); SMAGUE, Pascal, 92852 RUEIL-MALMAISON CEDEX (FR)
(74) Mandataire: IFP Energies nouvelles

(57) **Abrégé**

La présente invention concerne un véhicule terrestre (1) ou une remorque (3) de poids lourd, qui comporte un compartiment de stockage de marchandises (4). Au moins un conteneur amovible d'énergie électrique (5) est agencé au sein du compartiment de stockage de marchandises (4), pour alimenter un système moteur (7) relié à un essieu (6) du véhicule (1) ou de la remorque (3).

## Description

### Domaine technique

La présente invention concerne le domaine de l'électrification des véhicules terrestres, en particulier des autocars ou des poids lourds.

De tels véhicules ont généralement une importante consommation en carburant, et génèrent une quantité élevée d'émissions polluantes. Pour limiter ces deux aspects (consommation et pollution), l'électrification totale ou partielle des véhicules est envisagée. Cette électrification des véhicules génère des fortes contraintes de performances, de poids et d'encombrement des moyens de stockage de l'énergie électrique, en particulier pour les cars et les poids lourds. En effet, l'alimentation électrique de tels véhicules nécessite des batteries de tailles conséquentes compte-tenu des puissances de propulsion en jeu et de l'autonomie attendue. En outre, l'électrification de remorques de poids lourd peut être également prévue, pour participer à l'électrification totale ou partielle des poids lourds en complément de l'électrification totale ou partielle du tracteur.

### Technique antérieure

Différentes solutions d'électrification totale ou partielle de poids lourd notamment via la remorque ont été envisagées.

La demande de brevet US2016318406 concerne un système d'apport de puissance électrique additionnelle pour la traction d'un poids lourd à motorisation thermique conventionnelle. Le système d'apport de puissance électrique additionnelle comprend une machine électrique reliée à un essieu de la remorque du véhicule, un système de stockage de type batterie électrochimique, et un dispositif de contrôle qui définit en fonction des conditions de roulage (données de géolocalisation, vitesse, etc.) et des conditions de fonctionnement de la motorisation thermique si l'apport de puissance électrique est nécessaire ou pas. Pour cette configuration, la batterie peut être amovible. Toutefois, la batterie est placée dans le châssis de la remorque, ce qui rend difficile son retrait ou l'ajout d'autres batteries, et nécessite des moyens spécifiques de déplacement de la batterie. Ainsi, il semble difficile d'adapter l'électrification de la remorque en fonction de son besoin. En outre, cet emplacement limite la taille de la batterie et par conséquent la quantité d'énergie électrique ajoutée.

La demande de brevet US2019296295 concerne l'ajout d'une batterie supplémentaire pour un véhicule de type « pick up » (que l'on peut traduire par véhicule utilitaire léger, à cabine simple et à grand coffre découvert) disposant d'une propulsion hybride rechargeable à dérivation de puissance avec une batterie principale haute tension. La batterie supplémentaire parallélisée à la première vient se loger sur le plancher du coffre découvert du véhicule derrière la cabine. La batterie supplémentaire n'est déchargée que lorsque la batterie principale descend sous un certain niveau de charge SOC (de l'anglais « State of Charge »). Un tel système est donc adapté uniquement à un véhicule hybride. De plus, la batterie supplémentaire permet juste un remplacement de la batterie principale si son état de charge est réduit. Par conséquent, la batterie supplémentaire permet d'augmenter l'autonomie du véhicule mais n'apporte pas un entraînement supplémentaire du véhicule, tout en augmentant le poids de celui-ci. En outre, cet agencement et cet emplacement ne permettent pas une modularité de la quantité d'énergie électrique embarquée.

La demande de brevet CA3035952 concerne un système de batterie amovible sur une remorque de poids lourd. La batterie additionnelle permet d'améliorer l'efficacité énergétique du poids lourd et d'augmenter la capacité de franchissement en côte et l'assistance au freinage (récupération électrique) du véhicule. La batterie additionnelle se présente sous la forme d'un pack modulaire qui peut être mis en place ou enlevé de la remorque. Chaque module de batterie élémentaire dispose d'une forme standard qui lui donne la capacité d'être rackable en plusieurs modules. Pour cette configuration, la batterie est placée dans des racks (guides), ce qui nécessite des moyens spécifiques de déplacement de la batterie, pouvant rendre complexe les opérations de déplacement des batteries.

### Résumé de l'invention

L'invention a pour but de limiter la consommation de véhicules terrestres et de réduire les émissions polluantes, tout en permettant une gestion de l'énergie électrique à la fois adaptable et simplifiée. Pour cela, la présente invention concerne un véhicule terrestre ou une remorque de poids lourd, qui comporte un compartiment de stockage de marchandises. Au moins un conteneur amovible d'énergie électrique est agencé au sein du compartiment de stockage de marchandises, pour alimenter un système moteur relié à un essieu du véhicule ou de la remorque pour le cas du poids lourd articulé. Ainsi, le véhicule ou la remorque possède un système d'entraînement alimenté directement ou indirectement par une énergie électrique. De plus, l'agencement de l'au moins un conteneur amovible dans le compartiment de stockage de marchandises permet d'adapter le nombre de conteneurs amovibles d'énergie électrique au besoin, et permet d'ajouter ou de retirer facilement des conteneurs amovibles d'énergie électrique (manipulation facilitée).

L'invention concerne un véhicule terrestre ou remorque de poids lourd comprenant un compartiment de stockage de marchandises et au moins un essieu. Au moins un conteneur amovible d'énergie électrique est agencé au sein dudit compartiment de stockage de marchandises, au moins un essieu dudit véhicule terrestre ou de ladite remorque est entraîné par un système moteur essieu alimenté par l'énergie électrique dudit au moins un conteneur amovible.

Selon un mode de réalisation, ledit système moteur essieu comprend au moins une machine électrique pour l'entraînement dudit essieu et au moins un convertisseur de tension, notamment un convertisseur de tension continu/alternatif DC/AC et/ou un convertisseur de tension continu/continu DC/DC.

En variante, ledit système moteur essieu comprend au moins une électropompe et au moins un moteur hydraulique pour l'entraînement dudit essieu, et éventuellement un convertisseur de tension continu/continu DC/DC et/ou un convertisseur de tension continu/alternatif.

Conformément à une mise en oeuvre, ledit compartiment de stockage de marchandises comprend un bus électrique pour la connexion dudit au moins un conteneur amovible d'énergie électrique et pour l'alimentation dudit système moteur essieu, de préférence ledit bus électrique est disposé dans la partie supérieure ou dans la partie inférieure du compartiment de stockage de marchandises.

Avantageusement, ledit conteneur amovible d'énergie électrique comprend des moyens de stockage d'énergie électrochimique, un caisson, et des moyens de connexion audit bus électrique, de préférence lesdits moyens de connexion sont rétractables, pivotables ou pliables.

Selon une option de réalisation, ledit au moins un conteneur amovible d'énergie électrique comprend un système de géolocalisation dudit conteneur amovible d'énergie électrique.

Selon une configuration, ledit véhicule terrestre ou ladite remorque et/ou ledit au moins un conteneur amovible d'énergie électrique comprend un système de gestion de l'énergie.

Conformément à un mode de réalisation, ledit véhicule comprend un système de production électrique pour la charge d'au moins un conteneur amovible d'énergie électrique, de préférence ledit dispositif de production électrique comprend au moins un panneau photovoltaïque, et préférentiellement ledit au moins un panneau photovoltaïque est agencé sur le toit dudit véhicule terrestre ou de ladite remorque de poids lourd.

De manière avantageuse, ledit véhicule terrestre ou ladite remorque de poids lourd et/ou ledit au moins un conteneur amovible d'énergie électrique comprend un moyen de charge ou de décharge dudit au moins un conteneur amovible d'énergie électrique par une connexion à un réseau de distribution électrique.

Selon une mise en oeuvre, ledit véhicule terrestre ou ladite remorque comprend un moyen de récupération de l'énergie lors du freinage, l'énergie produite par ledit moyen de récupération de l'énergie lors du freinage étant stockée dans ledit au moins un conteneur amovible d'énergie électrique.

De plus, l'invention concerne un poids lourd comportant une remorque selon l'une des caractéristiques précédentes et un tracteur, ledit tracteur comportant un groupe motopropulseur.

D'autres caractéristiques et avantages du système selon l'invention, apparaîtront à la lecture de la description ci-après d'exemples non limitatifs de réalisations, en se référant aux figures annexées et décrites ci-après.

### Liste des figures

La figure 1 illustre un véhicule terrestre selon un premier mode de réalisation de l'invention.
La figure 2 illustre un véhicule terrestre selon un deuxième mode de réalisation de l'invention.
La figure 3 illustre une remorque de poids lourd selon un troisième mode de réalisation de l'invention.
La figure 4 illustre un véhicule terrestre selon un quatrième mode de réalisation de l'invention.
La figure 5 illustre une première mise en oeuvre des moyens de connexion du conteneur amovible d'énergie électrique.
La figure 6 illustre une deuxième mise en oeuvre des moyens de connexion du conteneur amovible d'énergie électrique.

### Description des modes de réalisation

La présente invention concerne un véhicule terrestre ou une remorque de poids lourd. Le véhicule terrestre ou la remorque de poids de lourd comprend un compartiment de stockage de marchandises et au moins un essieu.

Le véhicule terrestre peut notamment être un poids lourd ou un autocar, ou tout véhicule analogue. Par exemple il peut s'agir d'un poids lourd du type semi-remorque. De préférence, l'invention est particulièrement adaptée à un poids lourd ou à une remorque de poids lourd. En effet, un poids lourd comporte généralement un tracteur (avec notamment la cabine du conducteur et un groupe motopropulseur) et une remorque (pour le transport de la marchandise). L'invention permet alors d'aider à entraîner la remorque de poids lourd à partir d'une source d'énergie électrique indépendante du groupe motopropulseur du tracteur, ce qui permet de limiter la consommation de carburant du poids lourd ainsi qu'une réduction des émissions de polluants associées.

Le compartiment de stockage de marchandises correspond au volume dans lequel l'utilisateur du véhicule entrepose les marchandises à transporter. Avantageusement, le compartiment de stockage de marchandises peut correspondre à la soute à bagages pour un autocar, ou au volume interne de la remorque de poids lourd.

Selon l'invention, au moins un conteneur amovible d'énergie électrique est agencé au sein du compartiment de stockage de marchandises. Ainsi, une source d'énergie électrique est disponible pour le véhicule terrestre ou la remorque. Le conteneur est dit amovible car il peut être déplacé ou retiré du véhicule terrestre ou de la remorque. De plus, l'agencement dudit au moins un conteneur amovible d'énergie électrique dans le compartiment de stockage permet un accès aisé et un déplacement aisé du conteneur amovible : il suffit d'utiliser les moyens de déplacement de la marchandise pour le déplacement du conteneur (par exemple un chariot élévateur ou un transpalette). En outre, cet agencement permet d'adapter facilement la quantité de conteneurs amovibles d'énergie électrique dans le compartiment de stockage de marchandises, notamment en fonction de la quantité de marchandises à transporter (modularité de l'énergie électrique transportée) et de la mission (déplacement) à réaliser par le véhicule.

De plus, au moins un essieu du véhicule terrestre ou de la remorque comprend un système moteur essieu alimenté par l'énergie électrique contenu dans l'au moins un conteneur amovible d'énergie électrique. On appelle « système moteur essieu », un moyen d'entraînement d'un essieu. De cette manière, un entraînement d'au moins un essieu est permis à partir d'une source électrique. Cet entraînement contribue au déplacement du véhicule terrestre ou de la remorque de poids lourd, dans le but de réduire la consommation de carburant et les émissions polluantes. Il peut notamment contribuer à réduire ou effacer l'effet de la charge transportée par le véhicule terrestre ou la remorque de poids lourd sur son déplacement, en fournissant du couple à la roue pour compenser l'effet de la masse embarquée.

Selon une première variante, le système moteur essieu peut comprendre au moins une machine électrique pour entraîner l'essieu, et au moins un convertisseur de tension pour convertir la tension issue dudit au moins un conteneur amovible d'énergie électrique en une tension adaptée à la machine électrique. De plus, des câbles ou connecteurs électriques sont prévus pour relier chaque conteneur d'énergie électrique au(x) convertisseur(s) de tension d'une part, et pour relier le(s) convertisseur(s) de tension aux/ à la machine(s) électrique(s) d'autre part. Cette variante permet une gestion simple de l'énergie, sans nécessiter plusieurs sources d'énergie différentes. De manière avantageuse, le convertisseur électrique de tension peut comprendre un convertisseur continu/alternatif DC/AC, notamment pour assurer une alimentation en courant alternatif pour la machine électrique, et/ou un convertisseur continu/continu DC/DC, pour adapter le niveau de tension du conteneur à la tension d'entrée du convertisseur DC/AC et/ou adapter les différences de tension entre conteneurs lorsque plusieurs conteneurs amovibles d'énergie électrique sont connectés (convertisseur DC/DC multi-source).

Pour cette variante, le système moteur essieu peut comprendre plusieurs machines électriques, disposées dans plusieurs roues ou entraînant plusieurs essieux. En cas d'une pluralité de machines électriques, une pluralité de convertisseurs de tension associés ou non aux machines électriques ou un convertisseur de tension avec plusieurs sorties peut être prévu. De préférence, le système moteur essieu peut comporter un convertisseur de tension pour chaque machine électrique. Additionnellement ou alternativement, le système moteur essieu peut comporter un système de connexion mécanique avec un réducteur vers les roues.

Selon une deuxième variante, le système moteur essieu peut comprendre au moins une électropompe hydraulique (également appelé motopompe électrohydraulique) qui convertit l'énergie électrique issue dudit au moins un conteneur d'énergie électrique en une énergie hydraulique, et au moins un moteur hydraulique pour entraîner l'essieu. Cette variante est intéressante pour des raisons de coût, d'intégration (par exemple un moteur hydraulique peut être directement flasqué sur une roue et peut présenter une taille réduite pour une capacité de couple équivalente à l'électrique), de sécurité (réduction de l'accessibilité des systèmes à tension dangereuse) ou de facilité d'utilisation avec moins de contraintes (notamment des contraintes d'habilitation électrique). Pour cette variante, le système moteur essieu comporte des conduites hydrauliques pour la circulation du fluide hydraulique entre l'électropompe et le moteur hydraulique. De plus, le système convertisseur essieu peut comprendre en outre un convertisseur de tension pour convertir la tension issue dudit au moins un conteneur amovible d'énergie électrique en une tension adaptée à l'électropompe. De manière avantageuse, le convertisseur de tension peut comprendre un convertisseur de tension continu/continu DC/DC, potentiellement multi-source.

Pour cette variante, le système moteur essieu peut comprendre plusieurs moteurs hydrauliques, disposés dans plusieurs roues ou entraînant plusieurs essieux.

Selon un mode de réalisation, le compartiment de stockage de marchandises peut comprendre un réseau (bus) électrique pour la connexion de chaque conteneur amovible d'énergie électrique. Le bus électrique peut être agencé préférentiellement dans la partie supérieure du compartiment de stockage de marchandises (par exemple dans le toit de la remorque de poids lourd). Cette configuration permet une bonne sécurité électrique (pour éviter que toute personne entrant dans le compartiment de stockage de marchandises ne soit confrontée à un risque électrique par contact), permet d'éviter d'entraver le chargement et le déchargement de marchandises et des conteneurs amovibles d'énergie électrique. Alternativement, le bus électrique peut être agencé dans la partie inférieure du compartiment de stockage de marchandises (par exemple dans le sol de la remorque de poids lourd). Cette configuration permet de réduire la distance entre le bus électrique et le système moteur essieu et facilite la connexion entre les connecteurs et le bus. Pour cette configuration, un système de sécurité peut être prévu avec un système de déconnexion du bus électrique lorsqu'une porte du véhicule terrestre ou de la remorque de poids lourd est ouverte. En variante, le bus électrique peut être agencé dans une paroi latérale du compartiment de stockage de marchandises.

Chaque conteneur amovible d'énergie électrique peut comprendre :
- Des moyens de stockage d'énergie électrochimique,
- Un caisson formant une enveloppe du conteneur amovible d'énergie électrique,
- Des moyens de connexion au bus électrique du compartiment de stockage de marchandises, et
- Eventuellement, un système de gestion de batterie BMS (de l'anglais « Battery Management System »).

Les moyens de stockage d'énergie électrochimique peuvent comprendre une pluralité de cellules électrochimiques raccordées électriquement au sein d'un ou plusieurs modules. Avantageusement, pour ce mode de réalisation, on peut utiliser des cellules électrochimiques rechargeables de seconde vie. Par exemple, les cellules électrochimiques peuvent être une réutilisation de cellules d'une batterie électrique de traction d'un véhicule électrique ou hybride, cette batterie ayant été déclassée pour un usage de propulsion électrique.

Selon un aspect, le caisson peut avoir sensiblement une forme parallélépipédique afin de simplifier son agencement dans le compartiment de stockage de marchandises, et son déplacement par les moyens de déplacement des marchandises. Ainsi, le caisson peut avoir une forme équivalente à un conteneur de transport intégrable dans une remorque de poids lourd dédiée au transport de marchandises. Toutefois, le caisson peut avoir une autre forme telle que cylindrique, ou toute forme analogue. De plus, la hauteur du caisson peut correspondre sensiblement à la hauteur du compartiment de stockage de marchandises (c'est-à-dire entre 75 et 99% de la hauteur du compartiment de stockage de marchandises), de cette manière, on peut limiter la surface au sol du conteneur et optimiser le volume de stockage de marchandises. Alternativement, le caisson peut avoir une taille réduite, et peut être prévue pour un empilage de caissons sur la hauteur du compartiment de stockage de marchandises. En outre, le caisson peut comprendre une isolation électrique, peut avoir une compatibilité électromagnétique CEM (qui correspond à l'aptitude d'un appareil ou d'un système électrique, ou électronique, à fonctionner comme prévu dans l'environnement électromagnétique pour lequel l'appareil est conçu, sans produire lui-même des perturbations électromagnétiques intolérables), et peut comprendre des moyens de refroidissement des moyens de stockage électrochimique, etc.

Selon une option de réalisation, les moyens de connexion au bus électrique peuvent être rétractables, pivotables ou dépliables afin de simplifier l'installation et la connexion du conteneur amovible d'énergie électrique au bus électrique. Par exemple, les moyens de connexion peuvent être déployables verticalement, ou pivotables autour d'un axe horizontal. La rétractation, le pivotement ou le dépliage des moyens de connexion peuvent être automatiques ou actionnés, notamment par un interrupteur ou un levier placé sur le conteneur amovible d'énergie électrique ou éventuellement placé sur le poste de conduite, sur la cabine, sur une paroi externe du compartiment de stockage de marchandises, etc.

Selon un mode de réalisation, le véhicule terrestre ou la remorque de poids lourd peut comprendre un moyen de récupération de l'énergie lors du freinage. Dans cette situation de freinage, l'énergie produite par le moyen de récupération de l'énergie peut être stockée dans au moins un conteneur amovible de stockage d'énergie électrique. Pour cela, les éventuels moteurs, convertisseurs de tension et/ou l'électropompe, peuvent être bidirectionnels. Ainsi, l'efficacité énergétique globale est améliorée, ce qui permet de réduire les opérations de charge de l'au moins un conteneur amovible d'énergie électrique, ainsi que la consommation énergétique du véhicule terrestre ou de la remorque ainsi que les émissions de polluants.

Conformément à une mise en oeuvre de l'invention, chaque conteneur amovible d'énergie électrique peut comprendre un système de géolocalisation, tel qu'un capteur de positionnement par satellite, tel que le système GPS (de l'anglais Global Positioning System), le système Galileo, etc. Pour ce mode de réalisation, le système de géolocalisation peut être connecté à un système de commande du système moteur essieu, afin d'adapter la commande du système moteur essieu à des mesures du système de géolocalisation. Par exemple, le système de géolocalisation peut évaluer la vitesse du véhicule terrestre ou de la remorque, ainsi que le profil de la route, afin de réaliser de manière adéquate et autonome la gestion du couple aux roues du véhicule terrestre ou de la remorque pour réaliser l'assistance durant l'avancement. De cette manière, le système moteur essieu peut entraîner l'essieu lors d'une montée, ou freiner l'essieu lors d'une descente, et le cas échéant récupérer de l'énergie. En outre, pour le mode de réalisation qui concerne une remorque de poids lourd, le système de géolocalisation peut permettre un guidage et un roulage autonome de la remorque de poids lourd sans nécessiter de tracteur. Cette utilisation peut être envisagée sur un site de logistique notamment.

Selon un mode de réalisation de l'invention, le véhicule terrestre ou la remorque de poids lourd peut comprendre un système supervision de l'énergie. Un tel système de supervision de l'énergie permet notamment de gérer de manière centralisée la transmission et la répartition de puissance entre les différents composants que sont les moteurs et les convertisseurs ainsi que la charge, la décharge dudit au moins un conteneur amovible d'énergie électrique.

Alternativement ou cumulativement, chaque conteneur amovible d'énergie électrique peut comprendre un système de gestion de batterie BMS (de l'anglais « Battery Management System »). Un tel système de gestion de batterie permet notamment de gérer individuellement pour chaque conteneur amovible d'énergie électrique la charge, la décharge ainsi que l'équilibrage des cellules électrochimiques.

Selon un mode de réalisation de l'invention, le véhicule terrestre ou la remorque de poids lourd peut comprendre un moyen de charge et/ou de décharge électrique dudit au moins un conteneur amovible d'énergie électrique par une connexion à un réseau de distribution électrique. Ainsi, par branchement à un réseau de distribution électrique, on peut charger et/ou décharger ledit au moins un conteneur amovible d'énergie électrique. Par exemple, les moyens de charge et décharge du véhicule ou de la remorque peuvent permettre une connexion à une borne de charge.

Alternativement ou cumulativement, chaque conteneur amovible d'énergie électrique peut comprendre un moyen de charge et/ou de décharge du conteneur amovible d'énergie électrique par une connexion à un réseau électrique. Ainsi, lorsque le conteneur amovible d'énergie électrique est retiré du véhicule terrestre ou de la remorque de poids lourd, il peut être branché à un réseau de distribution électrique, et on peut réaliser la charge et/ou la décharge du conteneur amovible d'énergie électrique. Par exemple, le conteneur amovible d'énergie électrique peut être sorti du véhicule et branché à un système de production électrique, par exemple à un système de panneaux photovoltaïques d'un centre de logistique qui utilise le véhicule terrestre ou la remorque de poids lourd.

Conformément à une mise en oeuvre de l'invention, le véhicule terrestre ou la remorque de poids lourd peut comprendre un système de production électrique pour la charge dudit au moins un conteneur amovible d'énergie électrique. De préférence, le système de production électrique peut comprendre au moins un panneau photovoltaïque. Avantageusement, ledit au moins un panneau photovoltaïque peut être agencé sur le toit du véhicule terrestre, sur le toit de la partie tracteur ou le toit de la remorque de poids lourd. Ce dispositif de production électrique permet de produire de l'énergie électrique lorsque le véhicule est à l'arrêt ou lorsque qu'il se déplace. Pour ce mode de réalisation, ledit au moins un panneau photovoltaïque peut être un panneau rigide fixé sur la carrosserie du véhicule. En variante, ledit au moins un panneau photovoltaïque peut être formé d'un film mince souple intégré dans la carrosserie du véhicule. Pour le mode de réalisation pour lequel le véhicule est un poids lourd formé d'un tracteur et d'une remorque, ledit au moins un panneau photovoltaïque peut être agencé sur le toit de la remorque du poids lourd. Ainsi la surface du panneau photovoltaïque est élevée.

Selon un mode de réalisation de l'invention, le compartiment de stockage de marchandises peut comporter des moyens de fixation rapides des conteneurs amovibles d'énergie électrique pour éviter leur déplacement lors du roulage du véhicule terrestre ou de la remorque de poids lourd.

En outre, l'invention concerne un véhicule poids lourd comprenant un tracteur et une remorque selon l'une quelconque des variantes ou des combinaisons de variantes décrites précédemment. Le tracteur comprend un groupe motopropulseur pour le déplacement du poids lourd. Le groupe motopropulseur peut comprendre un moteur thermique et/ou une machine électrique et/ou une pile à combustible. Le groupe motopropulseur est indépendant des conteneurs amovibles d'énergie électrique et du système moteur essieu qui sont situés dans la remorque. En d'autres termes, le groupe motopropulseur n'est pas connecté aux connecteurs amovibles d'énergie électrique ni au système moteur essieu. Cette conception permet de concevoir séparément le tracteur et la remorque de poids lourd, tout en permettant de réduire la consommation de carburant et les émissions polluantes. De plus, cette conception permet d'associer la remorque à tout type de tracteur, sans prérequis sur le type de groupe motopropulseur du tracteur ou sans câblage spécifique entre le tracteur et la remorque.

L'invention est particulièrement adaptée pour un procédé de rétrofit (réaménagement) d'un véhicule terrestre ou d'une remorque de poids lourds. En effet, le véhicule terrestre ou la remorque nécessite uniquement une adaptation du compartiment de stockage de marchandises et l'ajout d'un système essieu moteur. Un tel réaménagement du véhicule terrestre ou d'une remorque ne nécessite pas de modification du châssis du véhicule terrestre ou de la remorque pour son électrification.

Ainsi, l'invention peut concerner un procédé de rétrofit d'un véhicule terrestre ou d'une remorque de poids lourd qui comporte un compartiment de stockage de marchandises et un essieu, dans lequel on met en oeuvre les étapes suivantes :
- On modifie au moins un essieu du véhicule terrestre ou de la remorque de poids lourd pour installer et connecter un système moteur essieu, par exemple une machine électrique ou un moteur hydraulique du système moteur essieu peut être flasqué sur les roues de l'essieu, et, à proximité de ou sur le(s) machine(s) électrique(s), on installe puis connecte des convertisseurs de tension DC/AC, ou respectivement une électropompe hydraulique à proximité du moteur hydraulique, et
- On installe un bus électrique au sein du compartiment de stockage de marchandises, ainsi que des moyens des systèmes de connexion électrique entre le bus électrique et les convertisseurs de puissance et le système de supervision d'énergie.

Dans le cas de l'utilisation de système hydraulique, on installe, puis connecte les différents composants participants à la transmission de puissance, entre l'électropompe et le moteur hydraulique, notamment des conduites hydrauliques.

Puis lors de l'utilisation du véhicule terrestre ou de la remorque de poids lourd, on installe au moins un conteneur amovible d'énergie électrique, en fonction du volume disponible et en fonction du besoin en énergie.

Ce procédé de rétrofit permet de transformer un véhicule d'origine en un véhicule selon l'une quelconque des variantes ou des combinaisons de variantes de l'invention.

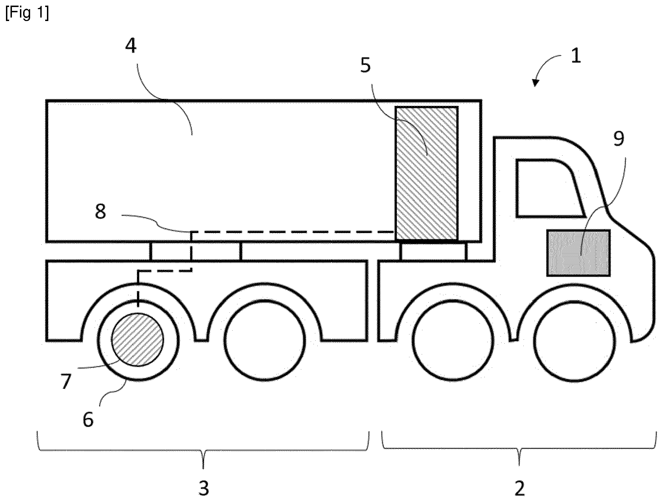

La figure 1 illustre, schématiquement et de manière non limitative, un poids lourd selon un mode de réalisation de l'invention. Le poids lourd 1 comprend un tracteur 2 et une remorque 3. Le tracteur 2 comprend un groupe motopropulseur 9 indépendant de la remorque 3. La remorque 3 comprend un compartiment de stockage de marchandises 4 (les marchandises ne sont pas représentées), ainsi que deux essieux 6. Un conteneur amovible d'énergie électrique 5 est agencé au sein du compartiment de stockage de marchandises 4. De plus, l'essieu 6 arrière de la remorque 3 comprend un système moteur essieu 7. Le système moteur essieu 7 comprend une machine électrique ou un moteur hydraulique pour l'entraînement de l'essieu 6 arrière. Un système de transmission de puissance électrique ou électro-hydraulique 8 permet de connecter le système moteur essieu 7 au conteneur amovible d'énergie électrique 5. Le système de transmission de puissance comprend notamment un bus électrique, représenté pour ce mode de réalisation dans la partie inférieure du compartiment de stockage de marchandises 4. Pour une meilleure compréhension de la figure, le bus électrique est représenté au-dessus du plancher du compartiment du stockage de marchandises 4, mais le bus électrique est de préférence agencé au sein du plancher du compartiment de stockage de marchandises 4, notamment pour le conteneur amovible 5 repose dessus.

Un seul conteneur amovible 5 est représenté sur la figure 1, mais ce nombre peut être adapté aux besoins en termes de volume disponible pour les marchandises, et en termes d'énergie électrique utile.

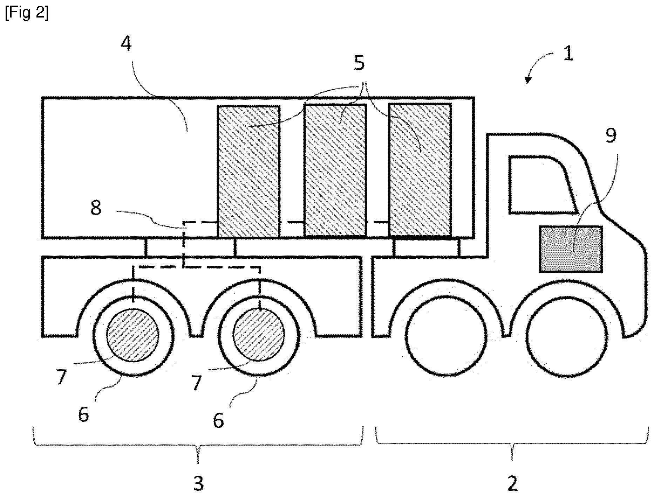

La figure 2 illustre, schématiquement et de manière non limitative, un poids lourd selon un mode de réalisation de l'invention. Le poids lourd 1 comprend un tracteur 2 et une remorque 3. Le tracteur 2 comprend un groupe motopropulseur 9 indépendant de la remorque 3. La remorque 3 comprend un compartiment de stockage de marchandises 4 (les marchandises ne sont pas représentées), ainsi que deux essieux 6. Trois conteneurs amovibles d'énergie électrique 5 sont agencés au sein du compartiment de stockage de marchandises 4. De plus, les deux essieux de la remorque 3 comprennent chacun un système moteur essieu 7. Chaque système moteur essieu 7 comprend une machine électrique ou un moteur hydraulique pour l'entraînement de l'essieu 6. Un système de transmission de puissance électrique 8 permet de connecter les systèmes moteurs essieu 7 aux conteneurs amovibles d'énergie électrique 5. Le système de transmission de puissance électrique comprend notamment un bus électrique, représenté pour ce mode de réalisation dans la partie inférieure du compartiment de stockage de marchandises 4. Pour une meilleure compréhension de la figure, le bus électrique est représenté au-dessus du plancher du compartiment du stockage de marchandises 4, mais le bus électrique est de préférence agencé au sein du plancher du compartiment de stockage de marchandises 4, notamment pour que le conteneur amovible 5 repose dessus.

Trois conteneurs amovibles 5 sont représentés sur la figure 2, mais ce nombre peut être adapté aux besoins en termes de volume disponible pour les marchandises, et en termes d'énergie électrique utile.

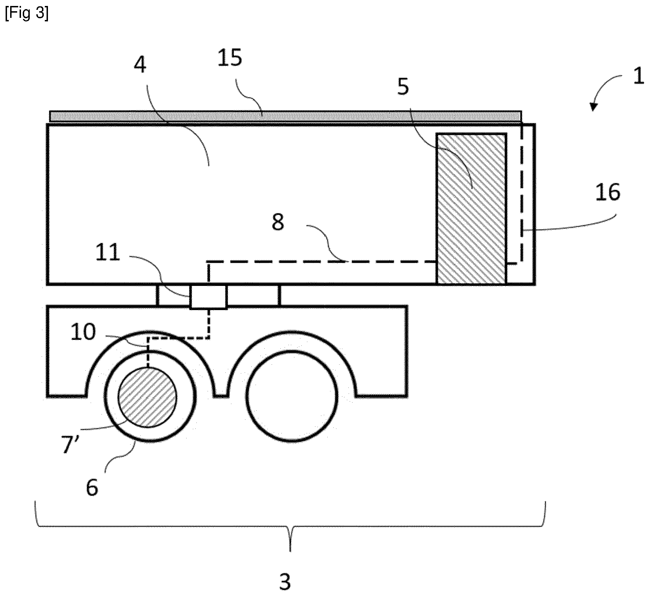

La figure 3 illustre, schématiquement et de manière non limitative, une remorque de poids lourd selon un mode de réalisation de l'invention. La remorque 3 comprend un compartiment de stockage de marchandises 4 (les marchandises ne sont pas représentées), ainsi que deux essieux 6. Un conteneur amovible d'énergie électrique 5 est agencé au sein du compartiment de stockage de marchandises 4. De plus, un essieu de la remorque 3 comprend un système moteur essieu 7'. Le système moteur essieu 7' comprend un moteur hydraulique pour l'entraînement de l'essieu 6, ainsi qu'une électropompe 11, qui convertit l'énergie électrique en énergie hydraulique. Un système de transmission de puissance électrique permet de connecter l'électropompe 11 au conteneur amovible d'énergie électrique 5. Le système de transmission de puissance électrique comprend notamment un bus électrique, représenté pour ce mode de réalisation dans la partie inférieure du compartiment de stockage de marchandises 4. Pour une meilleure compréhension de la figure, le bus électrique est représenté au-dessus du plancher du compartiment du stockage de marchandises 4, mais le bus électrique est de préférence agencé au sein du plancher du compartiment de stockage de marchandises 4, notamment pour le conteneur amovible 5 repose dessus.

Un convertisseur de tension DC/DC et/ou un convertisseur de tension DC/AC peut être prévu entre le conteneur amovible d'énergie électrique 5 et l'électropompe 11. De plus, une conduite hydraulique 10 connecte l'électropompe 11 au moteur hydraulique du système moteur essieu 7'. En outre, la remorque 3 comprend un panneau photovoltaïque 15 agencé sur le toit de la remorque 3, ainsi qu'un câblage électrique 16 pour relier le panneau photovoltaïque 15 au bus électrique 8, éventuellement au moyen d'un convertisseur de tension (non représenté).

Un seul conteneur amovible 5 est représenté sur la figure 3, mais ce nombre peut être adapté aux besoins en termes de volume disponible pour les marchandises, et en termes d'énergie électrique utile. De plus, le mode de réalisation de la figure 3 peut être adapté à un véhicule terrestre. En outre, le mode de réalisation de la figure 3 peut comprendre une pluralité de moteurs hydrauliques connectés à l'électropompe.

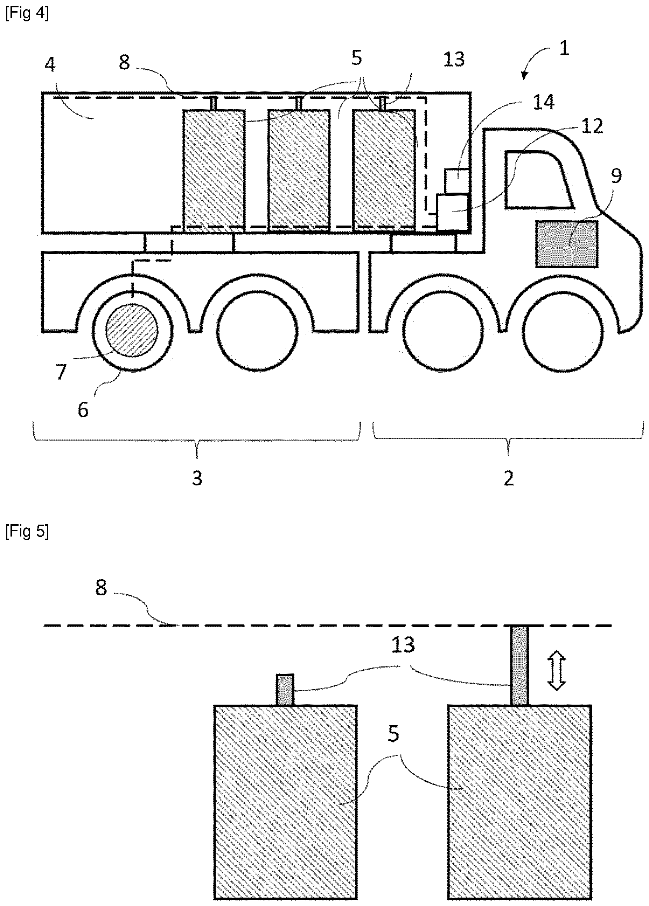

La figure 4 illustre, schématiquement et de manière non limitative, un poids lourd selon un mode de réalisation de l'invention. Le poids lourd 1 comprend un tracteur 2 et une remorque 3. Le tracteur 2 comprend un groupe motopropulseur 9 indépendant de la remorque 3. La remorque 3 comprend un compartiment de stockage marchandises 4 (les marchandises ne sont pas représentées), ainsi que deux essieux 6. Trois conteneurs amovibles d'énergie électrique 5 sont agencés au sein du compartiment de stockage marchandises 4. De plus, un des deux essieux de la remorque 3 comprend un système moteur essieu 7. Le système moteur essieu 7 comprend une machine électrique pour l'entraînement de l'essieu 6. De plus, un convertisseur de tension DC/AC 12 est agencé dans une zone arrière de service de la remorque 3. En outre, la remorque, en l'occurrence la zone arrière de service de la remorque comprend un moyen de charge et/ou de décharge 14 des conteneurs amovibles d'énergie électrique 5. Un système de transmission de puissance électrique permet de connecter les systèmes moteurs essieu 7 aux conteneurs amovibles d'énergie électrique 5, par l'intermédiaire du convertisseur de tension DC/AC 12. Le système de transmission de puissance électrique comprend notamment un bus électrique 8, représenté pour ce mode de réalisation dans la partie supérieure du compartiment de stockage de marchandises 4. Les conteneurs amovibles d'énergie électrique 14 comprennent des moyens de connexion 13 au bus électrique 8.

Trois conteneurs amovibles 5 sont représentés sur la figure 4, mais ce nombre peut être adapté aux besoins en termes de volume disponible pour les marchandises, et en termes d'énergie électrique utile. De plus, le mode de réalisation de la figure 4 peut être adapté à une remorque de poids lourd. En outre, le mode de réalisation de la figure 4 peut comprendre une pluralité de machines électriques connectées à plusieurs essieux 6.

Bien que les figures 1 à 4 concernent un poids lourd et une remorque de poids lourd, les modes de réalisation illustrés peuvent être adaptés à un autocar. Dans ce cas, le compartiment de stockage de marchandises est la soute à bagages.

En outre, bien que le panneau photovoltaïque soit représenté uniquement sur la figure 3, un tel panneau photovoltaïque peut être ajouté aux modes de réalisation des figures 1, 2 et 4. De la même manière, l'agencement du bus électrique dans la partie inférieure ou dans la partie supérieure du compartiment de stockage de marchandises peut être modifié.

La figure 5 illustre, schématiquement et de manière non limitative, un moyen de connexion au bus électrique selon une première variante de réalisation. Pour cette variante de réalisation, le bus électrique 8 est placé dans la partie supérieure du compartiment de stockage de marchandises (non représenté). Chaque conteneur amovible d'énergie électrique 5 comprend un moyen de connexion 13. Pour le conteneur amovible d'énergie électrique 5 de gauche, le moyen de connexion 13 est représenté en position repliée sans connexion avec le bus électrique 8, alors que pour le conteneur amovible d'énergie électrique 5 de droite, le moyen de connexion 13 est représenté en position dépliée avec connexion avec le bus électrique 8. Pour cette variante de réalisation, le moyen de connexion 13 peut être télescopique.

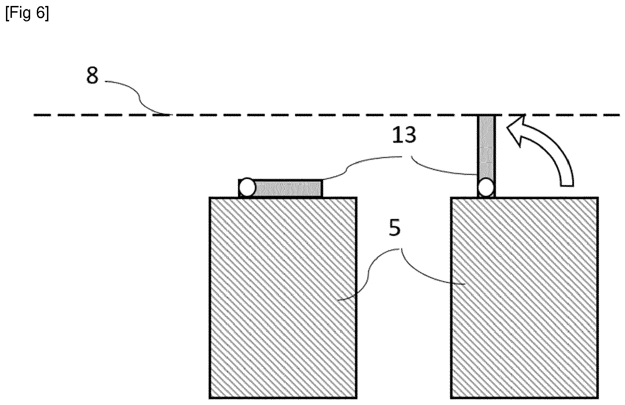

La figure 6 illustre, schématiquement et de manière non limitative, un moyen de connexion au bus électrique selon une deuxième variante de réalisation. Pour cette variante de réalisation, le bus électrique 8 est placé dans la partie supérieure du compartiment de stockage de marchandises (non représenté). Chaque conteneur amovible d'énergie électrique 5 comprend un moyen de connexion 13. Pour le conteneur amovible d'énergie électrique 5 de gauche, le moyen de connexion 13 est représenté en position rabattue sans connexion avec le bus électrique 8, alors que pour le conteneur amovible d'énergie électrique 5 de droite, le moyen de connexion 13 est représenté en position pivotée avec connexion avec le bus électrique 8. Pour cette variante de réalisation, le moyen de connexion 13 peut être pivotable autour d'un axe horizontal représenté par un cercle blanc.

Comme il va de soi, l'invention ne se limite pas aux seules formes de réalisation décrites ci-dessus à titre d'exemple, elle embrasse au contraire toutes les variantes de réalisation

## Revendications

1. Véhicule terrestre ou remorque de poids lourd comprenant un compartiment de stockage de marchandises (4) et au moins un essieu (6), **caractérisé en ce que** au moins un conteneur amovible d'énergie électrique (5) est agencé au sein dudit compartiment de stockage de marchandises (4), et **en ce qu'**au moins un essieu (6) dudit véhicule terrestre (1) ou de ladite remorque de poids lourd (3) est entraîné par un système moteur essieu (7) alimenté par l'énergie électrique dudit au moins un conteneur amovible (5).

2. Véhicule terrestre ou remorque de poids lourd selon la revendication 1, dans lequel ledit système moteur essieu (7) comprend au moins une machine électrique pour l'entraînement dudit essieu (6) et au moins un convertisseur de tension (12), notamment un convertisseur de tension continu/alternatif DC/AC et/ou un convertisseur de tension continu/continu DC/DC.

3. Véhicule terrestre ou remorque de poids lourd selon la revendication 1, dans lequel ledit système moteur essieu (7') comprend au moins une électropompe (11) et au moins un moteur hydraulique pour l'entraînement dudit essieu, et éventuellement un convertisseur de tension continu/continu DC/DC et/ou un convertisseur de tension continu/alternatif.

4. Véhicule terrestre ou remorque de poids lourd selon l'une des revendications précédentes, dans lequel ledit compartiment de stockage de marchandises (4) comprend un bus électrique (8) pour la connexion dudit au moins un conteneur amovible d'énergie électrique (5) et pour l'alimentation dudit système moteur essieu (7), de préférence ledit bus électrique (8) est disposé dans la partie supérieure ou dans la partie inférieure du compartiment de stockage de marchandises (4).

5. Véhicule terrestre ou remorque de poids lourd selon la revendication 4, dans lequel ledit conteneur amovible d'énergie électrique (5) comprend des moyens de stockage d'énergie électrochimique, un caisson, et des moyens de connexion audit bus électrique (13), de préférence lesdits moyens de connexion sont rétractables, pivotables ou pliables.

6. Véhicule terrestre ou remorque de poids lourd selon l'une des revendications précédentes, dans lequel ledit au moins un conteneur amovible d'énergie électrique (5) comprend un système de géolocalisation dudit conteneur amovible d'énergie électrique.

7. Véhicule terrestre ou remorque de poids lourd selon l'une des revendications précédentes, dans lequel ledit véhicule terrestre (1) ou ladite remorque (3) et/ou ledit au moins un conteneur amovible d'énergie électrique (5) comprend un système de gestion de l'énergie.

8. Véhicule terrestre ou remorque de poids lourd selon l'une des revendications précédentes, dans lequel ledit véhicule terrestre (1) ou ladite remorque de poids lourd (3) comprend un système de production électrique pour la charge d'au moins un conteneur amovible d'énergie électrique (5), de préférence ledit dispositif de production électrique comprend au moins un panneau photovoltaïque (15), et préférentiellement ledit au moins un panneau photovoltaïque (15) est agencé sur le toit dudit véhicule terrestre (1) ou de ladite remorque de poids lourd (3).

9. Véhicule terrestre ou remorque de poids lourd selon l'une des revendications précédentes, dans lequel ledit véhicule terrestre (1) ou ladite remorque de poids lourd (3) et/ou ledit au moins un conteneur amovible d'énergie électrique (5) comprend un moyen de charge ou de décharge (14) dudit au moins un conteneur amovible d'énergie électrique (5) par une connexion à un réseau de distribution électrique.

10. Véhicule terrestre ou remorque de poids lourd selon l'une des revendications précédentes, dans lequel ledit véhicule terrestre (1) ou ladite remorque de poids lourd (3) comprend un moyen de récupération de l'énergie lors du freinage, l'énergie produite par ledit moyen de récupération de l'énergie lors du freinage étant stockée dans ledit au moins un conteneur amovible d'énergie électrique (5).

11. Poids lourd (1) comportant une remorque (3) selon l'une des revendications précédentes et un tracteur (2), ledit tracteur comportant un groupe motopropulseur (9).
